# EUROPÄISCHE PATENTSCHRIFT

(11) **EP 2 088 874 B1**
(45) Veröffentlichungstag und Bekanntmachung des Hinweises auf die Patenterteilung: **27.08.2014**
(21) Anmeldenummer: 07819148.3
(22) Anmeldetag: 19.10.2007
(51) Int. Cl.: A23L 1/212, A23C 9/133, A23C 9/156, A23C 3/00, A23C 17/00, A23L 1/22, A23L 1/275, A23B 7/005

(54) **VERFAHREN ZUR HERSTELLUNG EINER FRUCHTZUBEREITUNG**
METHOD FOR THE PRODUCTION OF A FRUIT PREPARATION
PROCÉDÉ DE PRODUCTION D'UNE PRÉPARATION DE FRUITS

(30) Priorität: 19.10.2006 AT 17502006; 14.06.2007 AT 9272007
(43) Veröffentlichungstag der Anmeldung: 19.08.2009
(60) Teilanmeldung: 14176916.6
(73) Patentinhaber: Infruits Entwicklungs- und Produktions GmbH, 8330 Feldbach (AT)
(72) Erfinder: JEINDL, Matthias, 8262 Ilz (AT)
(74) Vertreter: Grabherr, Claudia
(86) Internationale Anmeldenummer: PCT/EP2007/009083
(87) Internationale Veröffentlichungsnummer: WO 2008/046638

(56) Entgegenhaltungen:
- DE-A1- 3 719 526
- US-A- 5 017 387
- US-A- 5 820 903
- US-A1- 2003 194 468
- TETRA PAK PROCESSING: "Fruchtzubereitungen"[Online] 6. April 2005 (2005-04-06), Seiten 1-2, XP002470618 Gefunden im Internet: URL:http://web.archive.org/web/20050406130 030/http://www.tetrapak-processing.de/gesc haeftsbereiche/fruchtzubereitungen.html> [gefunden am 2008-01-09]
- DATABASE FSTA [Online] INTERNATIONAL FOOD INFORMATION SERVICE (IFIS), FRANkFURT-MAIN, DE; HANSEN R: "Pasteurized fruit preparations in containers for dairies." XP002470619 Database accession no. 75-4-10-p2278 & NORDEUROPAEISK MEJERI-TIDSSKRIFT, Bd. 41, Nr. 2, 1975, Seite 63,
- PLATE J: "Hohe Produktschonung. Fruchtzubereitungen: kontinuierlich hergestellt und aseptisch verpackt Fruit preparations: produced continuously and packed aseptically" LEBENSMITTELTECHNIK, HAMBURG, DE, Bd. 29, Nr. 10, 1997, Seite 25, XP009094339 ISSN: 0047-4290

## Beschreibung

Die Erfindung betrifft ein Verfahren zur Herstellung einer Fruchtzubereitung, welche mindestens drei Komponenten A, B und C umfasst, und eines Molkereiproduktes, welches diese Fruchtzubereitung enthält.

Das bisher bekannte und weit verbreitete Verfahren zur Produktion von Fruchtzubereitungen umfasst im Wesentlichen folgende Bestandteile und Schritte:
- Tiefgefrorene oder aseptische Früchte, Saftkonzentrate, Zucker und/oder Stärkehydrolysate, teilweise Puffersalze und Wasser werden vermischt. Bei Diät-Produkten wird Zucker und/oder die Stärkehydrolysate beispielsweise durch Aspartam ersetzt. Des weiteren werden fallweise Fruchthärtungsprozesse durch Zugabe von Ca-Salzen und Enzymen, die über das fruchteigene Pektin eine Festigung erwirken, erreicht.
- Während des Mischprozesses wird die Mischung schonend erwärmt, wobei im Falle von Enzymierungen die Temperatur für einige Minuten bei etwa 30-50°C gehalten wird.
- Danach erfolgt die Zugabe von Stabilisatoren bei ca. 60 °C. Als mögliche Stabilisatoren kommen vielfältig Verschiedene zum Einsatz, bei den meisten Fällen modifizierte Stärken, wie beispielsweise Stärke E 1442 oder E 1422.
- Das Gemisch wird weiter auf etwa 95 °C erhitzt, der Kochkessel geschlossen und das Gemisch wird für ca. 10 min. heißt gehalten.
- Es erfolgt eine Abkühlung, meistens durch Vakuum-Kühlverfahren auf etwa 60 °C.
- Färbende Lebensmittel und Aromen, sowie teilweise auch Puffersalze werden separat flashpasteurisiert und in die auf ca. 40-60 °C abgekühlte Fruchtzubereitung mittels Dampfstoß eingebracht.
- Die Gesamtmischung wird auf 25 bis 40 °C abgekühlt.
- Es folgt eine kaltaseptische Abfüllung in gereinigte und sterile Edelstahlcontainer.

Aus dem Stand der Technik sind Verfahren zur Herstellung von Fruchtzubereitungen aus den Druckschriften US 2003/194468 A1, US 5 017 387 A, sowie US 5 820 903 A bekannt. Bei diesen bisher bekannten Verfahren ergeben sich jedoch vielseitige Probleme, was wirtschaftliche Aspekte, Arbeitsaufwand sowie Transportkosten betrifft. Zum einen ergibt sich ein hoher Kosten- und Geräteaufwand bei der Herstellung, da die Bestandteile, die in niedrigerer Konzentration in der Fruchtzubereitung vorliegen, gemeinsam mit den Bestandteilen wie Zucker und Wasser, welche einen Großteil der Fruchtzubereitung ausmachen, gemeinsam behandelt werden, Das gleiche Problem ergibt sich auch beim Transport, bei dem die fertige Fruchtzubereitung zur Weiterverarbeitung transportiert werden muss. Ein erhöhter Arbeitsaufwand besteht des weiteren darin, dass spezielle Rezepturen für unterschiedliche Kundenwünsche jeweils nur für den kompletten Herstellungsprozess der Fruchtzubereitung berücksichtigt werden können und somit für jede Rezeptur eine komplette Anlage praktisch blockiert ist.

Es ist somit Aufgabe der vorliegenden Erfindung, ein Verfahren zu schaffen, bei dem die oben genannten Nachteile beseitigt werden, der Arbeitsaufwand minimiert wird, die Produktions- und Transportkosten herabgesetzt werden sowie Kundenwünsche, wie spezielle Rezepturen flexibel berücksichtigt werden können.

Diese Aufgabe wird dadurch gelöst, dass ein Verfahren zur Herstellung einer Fruchtzubereitung sowie eine Fruchtzubereitung geschaffen wird, welche mindestens drei Komponenten A, B und C umfasst, wobei
Komponente A hergestellt wird aus mindestens den Bestandteilen:
- Frische Früchte,
- geringfügige Anteile von Wasser,
- gegebenenfalls Zucker oder Stärkehydrolysate,
- gegebenenfalls Ca-Salze und Enzyme zur Fruchthärtung,
- gegebenenfalls Stabilisatoren
Komponente B hergestellt wird aus mindestens den Bestandteilen:
- natürliche oder naturidente Aromen, gegebenenfalls From-The-Native-Fruit-(FTNF)-Aromen,
- Wasser als Lösungsmittel und Trägerstoff,
   sowie zumindest einem weiteren Bestandteil ausgewählt aus der Gruppe: färbende Lebensmittel und oder Lebensmittelfarbstoffe, Puffersalze, Stabilisatoren, Saftkonzentrate, verschiedene Zuckerarten als Trägerstoff, andere Süßstoffe, wie beispielsweise Aspartam, Acesulfam
und Komponente C hergestellt wird aus mindestens den Bestandteilen:
- Wasser,
- Zuckerarten oder Süßstoffen,
- gegebenenfalls Stabilisatoren.

Als Lebensmittelfarbstoff in Komponente B kann beispielsweise Carminsäure, als färbendes Lebensmittel beispielsweise Rote Beete Konzentrat, Schwarzes Karottensaftkonzentrat und als Puffersalz in Komponente B beispielsweise Trinatriumcitrat und/oder Zitronensäure verwendet werden.

Der Fruchtanteil von Komponente A beträgt vorzugsweise mind. 80 Gew.%.

Die drei Komponenten A, B und C werden wie folgt hergestellt, wobei der wesentliche Vorteil darin besteht, dass die Komponente C direkt beim jeweiligen Kunden verarbeitet werden kann und somit der logistische Aufwand sowie die Transportkosten gesenkt werden können.

Die Komponente A wird hergestellt, indem frische Früchte in kontinuierlichen Verfahren unter Zusatz von wenig Wasser, eventuell Zucker oder Stärkehydrolysaten bei 80 bis 98 °C pasteurisiert werden. Weiters werden bereits die oben beschriebenen Fruchthärtungstechnologien mit Ca-Salzen und Enzymen angewendet, mit deutlich besserem Erfolg als mit der tiefgefrorenen Frucht im herkömmlichen Verfahren. Eine leichte Stabilisierung wäre auch durchführbar. Die zugesetzte Wassermenge soll möglichst klein sein, um die Gesamtmenge dieser Komponente A klein zu halten. Die Wassermenge soll aber groß genug sein, um die Verarbeitung und Durchmischung bzw. Lösung der Bestandteile zu ermöglichen.

Es folgt eine Kühlung über beispielsweise Schabewärmetauscher oder Röhrenkühler und anschließend die Abfüllung in aseptische Beutel bei der Temperatur von 20 bis 40 °C je nach Frucht. Bei roten Früchten (Erdbeeren, Himbeeren, Kirschen, ...) ist gerade die möglichst tiefe Abfülltemperatur zur Farberhaltung entscheidend.

Die Komponente B wird aus folgenden Bestandteilen hergestellt:
- Natürliche oder naturidente Aromen, gegebenenfalls FTNF-Aromen
- Wasser als Lösungsmittel und Trägerstoff, sowie zumindest ein weiterer Bestandteil ausgewählt aus der Gruppe:
- Färbende Lebensmittel, die je nach Rezeptur notwendig sein können, insbesondere bei roten Früchten, z.B. Rote Beetessaftkonzentrat, Schwarzes Karottensaftkonzentrat, Holundersaftkonzentrat oder Traubenschalenextrakt bzw. -pulver, Lebensmittelfarbstoffe wie z. B. Carminsäure oder Curcuma, Puffersalze (meist Trinatriumcitrat und Zitronensäure), Saftkonzentrate, Zucker und Zuckerarten als Trägerstoff, bei Diätprodukten Aspartam, Acesulfam oder andere Süßstoffe. Als Stabilisatoren können zB modifizierte Stärke, Johannisbrotkernmehl, Guarkernmehl, Xanthan oder andere im Lebensmittelbereich gängige Stabilisatoren oder Mischungen davon eingesetzt werden.

Die Zutaten werden sehr schonend erwärmt, fallweise homogenisiert, bei 75 bis 95 °C, bevorzugt bei etwa 85 °C pasteurisiert, gekühlt auf < 25 °C und kaltaseptisch abgefüllt beispielsweise in eine Bag in Box.

Charakteristisch für die Komponente B, auch Compound genannt, ist die hohe Konzentration der Zutaten. Die gesamte Komponente wird mit einer Dosierungsbandbreite von mindestens 0,1 % bis maximal 1 % (umgerechnet für das fertige Endprodukt wie z.B. ein Molkereiprodukt) angewendet.

Der Endhersteller wie beispielsweise eine Molkerei führt die Komponenten A und B unter Zugabe von Komponente C zur fertigen Fruchtzubereitung zusammen. Das Zusammenführen erfolgt nach folgendem Schema:
- Komponente A (aseptische Früchte) wird mit Komponente C, nämlich Zucker (ausgenommen Diätprodukte), Zuckerarten und Wasser vermischt und schonend erhitzt,
- Zugabe von Stabilisatoren bei ca. 60 °C (meist Stärke E 1422),
- Erhitzen auf 80-99 °C, bevorzugt bei ca. 85 °C,
- Heißhalten auf Pasteurisationstemperatur bevorzugt für 4-12 min, insbesondere bevorzugt ca. 10 min.,
- Kühlung auf 20-60 °C, bevorzugt auf ca. 45 °C,
- kaltaseptische Zugabe und Einmischung von Komponente B
- Kühlung auf 20-45 °C bevorzugt auf unter 30 °C
- Abfüllung in Steriltanks, Sterilcontainer oder aseptische Beutel.

Bezogen auf die fertige Fruchtzubereitung liegt die Komponentenverteilung in Gew.% bevorzugt wie folgt:
Komponente A (asept. Frucht) 20-60 %
Komponente B (Compound) 1-10%
Componente C (beim Endabnehmer) 35-75%

Für beispielsweise eine Joghurtherstellung wird die fertige Fruchtzubereitung kaltaseptisch mit der Joghurtgrundmasse mit Dosierungen von 5 bis 25 % je nach Fruchtanteil und Qualität ausgemischt und abgefüllt.

Bezogen auf das fertige Endprodukt wie zB ein Molkereiprodukt liegt die Komponentenverteilung in Gew.% bevorzugt wie folgt:
- Komponente A (aseptische Frucht) 1-15%
- Komponente B (Compound) 0,1-1%
- Komponente C (beim Endabnehmer) 35-75%

Die wesentlichen Vorteile des erfindungsgemäßen Verfahrens liegen zum einen in dem separaten Zusammenführen über thermische und kaltaseptische Prozesse der einzelnen Komponenten direkt vor der Weiterverarbeitung der Fruchtzubereitung beispielsweise in einer Molkerei. Bei der Herstellung eines Joghurts werden also aseptische Früchte mit einem Fruchtanteil von mind. 80 % entsprechend der Komponente A zugeliefert. Eine herkömmliche Fruchtzubereitung hat in der Regel nur einen Fruchtanteil von 35 bis 60 %. Die Dosierung der Komponente A im fertigen Joghurt beträgt 1% bis 15 % bevorzugt 5-7%. Des weiteren wird die Komponente B aus Zusatzstoffen zugeliefert. Diese Komponente hat im fertigen Joghurt eine Dosierung von 0,1 % bis 1 %, bevorzugt 0,3-0,6%. Die Komponente C bestehend aus Zucker, Zuckerarten, gegebenenfalls Stabilisatoren und Wasser kann in einfacher Weise von der Molkerei beim günstigsten Anbieter beschafft werden und wird dort erst mit den Komponenten A und B zusammengeführt und anschließend durch herkömmliche Herstellungsverfahren mit der Joghurtgrundmasse vermengt.

Ein weiterer wesentlicher Vorteil ist, dass die Komponente B flexibel für unterschiedliche Kundenwünsche hergestellt werden und somit mit den im Prinzip gleichbleibenden Komponenten A und C in modularer Weise individuell zusammengesetzt werden kann. Besonders vorteilhaft dabei ist, dass die Komponente B, welche im Wesentlichen Farben und Aromen enthält, schonend pasteurisiert wird und kaltaseptisch in den Zubereitungsprozess ohne weitere Erhitzung eingebracht werden kann. Das Einbringen mittels unkontrolliertern Dampfstoß wie im herkömmlichen Verfahren ist somit nicht notwendig. Durch das Konzentrieren der individualisierenden Bestandteile unterschiedlicher Abnehmer in der Komponente B, die in ihrem Volumen weit geringer als die Komponente A oder C ist, ergeben sich große Vorteile in Hinblick auf Herstellungs- und Transportkosten.

In Tabelle 1 ist als Ausführungsbeispiel einer möglichen Fruchtzubereitung die Zusammensetzung für eine Pfirsich-Maracuja Fruchtzubereitung angeführt. Sämtliche Angaben sind in Gew.% bezogen auf die jeweilige Komponente oder die gesamt Zubereitung angegeben.

Des Weiteren ist die endgültige Konzentration der einzelnen Komponenten in einem Endprodukt, in diesem Fall einem Fruchtjoghurt angeführt. Wie ersichtlich hat die Komponente B den gewichtsmäßig geringsten Anteil, stellt aber in Hinblick auf die Individualität der Fruchtzubereitung die wichtigste Komponente dar. Es besteht also eine hohe Flexibilität dahingehend, dass man die Zusammensetzung der Komponente B für verschiedene Anwendungen modifizieren kann und dabei dennoch die Produktions- und Transportkosten gering hält, da diese Komponente nur in geringen Endkonzentrationen vorliegt.

**Tabelle 1**

| **A** | | **B** | | **GESAMTFRUCHTZUBEREITUNG** | |
|---|---|---|---|---|---|
| **Aseptische Frucht** | | **COMPOUND** | | **Molkerei** | |
| **Pfirsich aseptisch** | **Gew.%** | **Pfirsich Maracuja Compound** | **Gew.%** | **Pfirsich-Maracuja Joghurt mit Stückchen** | **Gew.%** |
| | | | | Komponente C: | |
| Pfirsichwürfel frisch | 90% | Passionsfruchtsaftkonzentrat. | 15,82% | Wasser | 10,10% |
| Zuckerlösung 70 °Brix | 5% | Wasser | 21,20% | Zucker | 31,30% |
| Ascorbinsäure max. | 0,05% | Zitronensäure | 3,16% | Stärke E 1442 HP | 3,60% |
| Zitronensäure max. | 0,10% | Trinatrium-Citrat | 3,16% | Glucosesirup Brix 83° | 15,00% |
| Wasser | 4,85% | Karottensaftkonzentrat | 1,27% | Komponente A | 38,00% |
| Summe | 100% | Wasser | 4,75% | Komponente B | 2,00% |
| | | Aroma Pfirsich Maracuja | 50,63% | Summe | 100,00% |
| | | Summe | 100,00% | | |

| Dosierung im Joghurt | | | | | |
|---|---|---|---|---|---|
| A | 6,84% | | | | |
| B | 0,36% | | | | |
| C | 10,80% | | | | |
| Gesamtfruchtzubereitung | 18,00% | | | | |

Die Tabellen 2 und 3 zeigen weitere Ausführungsbeispiele für eine Erdbeerfruchtzubereitung sowie für eine Ananasfruchtzubereitung.

**Tabelle 2**

| **A** | | **B** | | GESAMTFRUCHTZUBEREITUNG | |
|---|---|---|---|---|---|
| **Erdbeere aseptisch** | **Gew.%** | **Erdbeer Compound** | **Gew.%** | **Erdbeerjoghurt mit Stücken** | **Gew.%** |
| | | | | Komponente C: | |
| Erdbeerwürfel frisch | 90% | Wasser | 9,87% | Wasser | 32,50% |
| Zuckerlösung 70°Brix | 5% | Trinatrium-Citrat | 2,68% | Zucker | 18,00% |
| Ascorbinsäure max. | 0,30% | Zitronensäure | 5,36% | Johannisbrotkernmehl | 0,30% |
| Zitronensäure max. | 0,30% | Erdbeersaftkonzentrat | 26,82% | Stärke E 1442 HP | 3,70% |
| Enzym zur Fruchthärtung (Novoshape) | 0,70% | Aroma Erdbeer Silesia 1223 | 40,24% | Glucosesirup Brix 83° | 15,00% |
| Ca-lactat | 1,00% | Kalium-Sorbat | 0,54% | Komponente A | 28,00% |
| Wasser | 2,70% | Karottensaftkonzentrat Schwarz | 8,58% | Komponente B | 2,50% |
| Gesamt | 100% | Rote Beete Saftkonzentrat | 5,90% | Gesamt | 100% |
| | | Gesamt | 100,00% | | |

| Dosierung im Joghurt | | | | | |
|---|---|---|---|---|---|
| A | 5,04% | | | | |
| B | 0,45% | | | | |
| C | 12,51% | | | | |
| Gesamtfruchtzubereitung | 18,00% | | | | |

**Tabelle 3**

| C | | B | | GESAMTFRUCHTZUBEREITUNG | |
|---|---|---|---|---|---|
| **Ananaspüreekonzentrat aseptisch 30°Brix** | **Gew.%** | **Ananas Drink Diät Compound** | **Gew.%** | **Ananas Drink Diät Joghurt** | **Gew.%** |
| | | | | Komponente C: | |
| Ananas frisch | 400% | Ananas Saftkonzentrat 60° | 34,50% | Fructose flüssig | 7,00% |
| ergibt Ananaspüree konzentriert | 95,0% | Wasser | 47,92% | Wasser | 63,33% |
| Wasser. | 4,85% | Curcuma Farbe Gelb | 0,48% | Stärke E 1442 HP | 3,70% |
| Ascorbinsäure max. | 0,05% | Zitronensäure | 3,59% | Wasser | 6,00% |
| Zitronensäure max. | 0,10% | Aspartame | 2,28% | Komponente A | 15,80% |
| Gesamt | 100% | Acesulfam K | 2,28% | Komponente B | 4,17% |
| | | Aroma Ananas Naturident | 8,96% | Gesamt | 100% |
| | | Gesamt | 100,00% | | |

| Dosierung im Joghurt | | | | | |
|---|---|---|---|---|---|
| A | 1,89% | | | | |
| B | 0,50% | | | | |
| C | 9,61% | | | | |
| Gesamtfruchtzubereitung | 12,00% | | | | |

## Patentansprüche

1. Verfahren zur Herstellung einer Fruchtzubereitung, **dadurch gekennzeichnet, dass** sie mindestens drei Komponenten A, B und C umfasst, wobei Komponente A hergestellt wird aus mindestens den Bestandteilen
- Frische Früchte,
- geringfügige Anteile von Wasser,
- gegebenenfalls Zucker oder Stärkehydrolysate,
- gegebenenfalls Ca-Salze und Enzyme zur Fruchthärtung,
- gegebenenfalls Stabilisatoren,
Komponente B hergestellt wird aus mindestens den Bestandteilen
- natürliche oder naturidente Aromen, gegebenenfalls FTNF-Aromen
- Wasser als Lösungsmittel und Trägerstoff,
sowie zumindest einem weiteren Bestandteil ausgewählte aus der Gruppe:
- färbende Lebensmittel und oder Lebensmittelfarbstoffe, Puffersalze, Stabilisatoren, Saftkonzentrate, verschiedene Zuckerarten als Trägerstoff, andere Süßstoffe, wie beispielsweise Aspartam, Acesulfam,
und Komponente C hergestellt wird aus mindestens den Bestandteilen
- Wasser,
- Zuckerarten oder Süßstoffen,
- gegebenenfalls Stabilisatoren,
und das Verfahren folgende Schritte umfasst:
Herstellung der Komponente A:
- Pasteurisierung der frischen Früchte unter Zusatz von geringfügigen Anteilen an Wasser sowie gegebenenfalls Zucker oder Stärkehydrolysate, Ca-Salze und Enzyme zur Fruchthärtung bei 80°C bis 98°C
- Kühlung der Komponente A beispielsweise über Schabewärmetauscher oder Röhrenkühler
- Abfüllung bei einer Temperatur der Komponente A von etwa 20°C bis 40°C.
Herstellung der Komponente B:
- Schonende Erwärmung der Zutaten, sowie gegebenenfalls Homogenisierung
- Pasteurisierung bei 75°C bis 95°C, bevorzugt bei etwa 85°C
- Kühlung auf unter 25°C.
Zusammenführung der Komponenten A, B und C nach folgendem Schema:
- Vermengung der Komponente A und C
- Schonende Erhitzung des Gemisches auf 82-95°C, bevorzugt auf etwa 85°C
- Halten der Temperatur für 4-12 min, bevorzugt für etwa 10 min
- Kühlung des Gemisches auf 25-60°C, bevorzugt auf etwa 45°C
- Kaltaseptische Zugabe und Vermengung der Komponente B
- Kühlung der Fruchtzubereitung auf 25-45°C, bevorzugt auf unter 30°C.

2. Verfahren zur Herstellung einer Fruchtzubereitung nach Anspruch 1, **dadurch gekennzeichnet, dass** als Lebensmittelfarbstoff in Komponente B Carminsäure und/oder Carcuma und/oder als färbendes Lebensmittel Rote Beetessaftkonzentrat, schwarzes Karottensaftkonzentrat, Holundersaftkonzentrat, Traubenschalenextrakt und/oder Traubenschalenpulver verwendet wird.

3. Verfahren zur Herstellung einer Fruchtzubereitung nach Anspruch 1 oder 2, **dadurch gekennzeichnet, dass** als Puffersalze in Komponente B Trinatriumcitrat und/oder Zitronensäure verwendet werden.

4. Verfahren zur Herstellung einer Fruchtzubereitung nach Anspruch 1 bis 3, **dadurch gekennzeichnet, dass** Komponente A einen Fruchtanteil von mindestens 80% aufweist.

5. Verfahren nach den Ansprüchen 1 bis 4, **dadurch gekennzeichnet, dass** die Herstellung der Komponente C folgende Schritte umfasst:
- Zucker, gegebenenfalls Saccharose verschiedene Zuckerarten, und Wasser werden erhitzt
- Stabilisatoren werden zugeführt, bevorzugt bei etwa 60°C
- Erhitzen der Mischung auf etwa 80°C bis 99°C, bevorzugt bei etwa 90°C
- Heißhalten auf Pasteurisierungstemperatur, bevorzugt für etwa 10 min
- Kühlung der Mischung C auf 20°C bis 60°C
- Kaltaseptische Abfüllung im Behälter oder Weiterleitung zum Produktstrom des Endverarbeiters.

## Claims

1. Method for the production of a fruit preparation, **characterised in that** it comprises at least three components A, B and C, wherein component A is produced from at least the following ingredients:
- fresh fruit,
- small amounts of water,
- optionally sugars or hydrolysed starches,
- optionally Ca salts and fruit setting enzymes,
- optionally stabillsers,
component B is produced from at least the following ingredients:
- natural or nature-identical flavourings, optionally FTNF flavorings,
- water as solvent and carrier,
and at least one other ingredient selected from among:
- colouring foods and/or food colourings, buffer salts, stabilisers, juice concentrates, different types of sugar as carrier, other sweeteners such as for example aspartame or acesulfame,
and component C is produced from at least the following ingredients:
- water,
- types of sugar or sweeteners,
- optionally stabilisers,
and the method comprises the following steps:
production of component A:
- pasteurisation of the fresh fruits with the addition of small amounts of water and optionally sugar or hydrolysed starches, Ca salts and fruit setting enzymes at 80°C to 98°C
- cooling component A for example by means of scraped-surface heat exchangers or tubular coolers, for example
- decanting at a temperature for component A of about 20°C to 40°C;
production of component B:
- gently heating the ingredients and optionally carrying out homogenisation
- pasteurising at 75°C to 95°C, preferably at about 85°C
- cooling to below 25°C;
combining components A, B and C according to the following plan:
- mixing components A and C,
- gently heating the mixture to 82-95C, preferably to about 85°C,
- maintaining the temperature for 4-12 min, preferably for about 10 min,
- cooling the mixture to 25-60°C, preferably to about 45°C,
- adding and mixing in component B under cold-aseptic conditions,
- cooling the fruit preparation to 25-45°C, preferably to below 30°C.

2. Method for the production of a fruit preparation according to claim 1, **characterised in that** carminic acid and/or curcumin is used as food colouring in component B and/or red beetroot juice concentrate, black carrot juice concentrate, elderberry juice concentrate, grape skin extract and/or grape skin powder is used as a colouring food.

3. Method for the production of a fruit preparation according to claim 1 or 2, **characterised in that** trisodium citrate and/or citric acid is or are used as buffer salts in component B.

4. Method for the production of a fruit preparation according to claims 1 to 3, **characterised in that** component A contains a proportion of fruit of at least 80%.

5. Method according to claims 1 to 4, characterised that the production of component C comprises the following steps:
- sugar, optionally saccharose different types of sugar, and water are heated,
- stabilisers are added, preferably at about 60°C,
- the mixture is heated to about 80°C to 99°C, preferably about 90°C,
- the mixture is kept hot at pasteurisation temperature, preferably for about 10 min
- the mixture C is cooled to 20°C to 60°C
- It is decanted into the container under cold-aseptic conditions or transported onwards into the product stream of the final professor.

## Revendications

1. Procédé de fabrication d'un produit à base de fruits, **caractérisé en ce que** le produit comprend au moins trois composants A, B et C, parmi lesquels
le composant A est préparé à partir d'au moins les constituants suivants :
- des fruits frais,
- de petites quantités d'eau
- en option, du sucre ou de l'hydrolysat d'amidon,
- en option, des sels de calcium et des enzymes de raffermissement de fruits,
- et en option, des stabilisants,
le composant B est préparé à partir d'au moins les constituants suivants :
- des arômes naturels ou simili-naturels, en option des arômes dits « FTNF »,
- et de l'eau en tant que solvant et véhicule,
ainsi qu'à partir d'au moins un autre constituant choisi dans l'ensemble formé par les suivants :
- aliments colorants et/ou colorants alimentaires, sels tampons, stabilisants, concentrés de jus, sucres de différentes sortes en tant que véhicules, et autres édulcorants comme par exemple aspartame et acésulfame,
et le composant C est préparé à partir d'au moins les constituants suivants :
- de l'eau,
- des sucres de diverses sortes ou des édulcorants,
- et en option, des stabilisants ;
et **en ce que** le procédé comporte les étapes suivantes :
préparation du composant A :
- pasteuriser les fruits frais, tout en y ajoutant de petites quantités d'eau ainsi que, en options, du sucre ou de l'hydrolysat d'amidon, des sels de calcium et des enzymes de raffermissement de fruits, à une température de 80 à 98 °C,
- faire refroidir le composant A, par exemple en le faisant passer dans un échangeur de chaleur a plateaux ou dans un réfrigérant à tubes,
- et soutirer le composant A tandis qu'il se trouve à une température d'environ 20 à 40 °C ;
préparation du composant B :
- chauffer les ingrédients avec modération, et en option, les homogénéiser,
- pasteuriser le tout à une température de 75 à 95°C et de préférence, d'environ 85 °C,
- et faire refroidir le tout jusqu'à moins de 25 °C ;
et mise ensemble des composants A, B et C selon le mode opératoire suivant :
- mélanger les composants A et C,
- chauffer ce mélange avec modération, jusqu'à une température de 82 à 95 °C, et de préférence, d'environ 85 °C,
- le maintenir à cette température durant 4 à 12 minutes, et de préférence, durant environ 10 minutes,
- faire refroidir le mélange jusqu'à une température de 25 à 60°C, et de préférence, d'environ 45 °C,
- y ajouter le composant B, à froid et sous asepsie, et l'y mélanger,
- et faire refroidir le produit à base de fruits jusqu'à une température de 25 à 45 °C, et de préférence, jusqu'à moins de 30 °C.

2. Procédé de fabrication d'un produit à base de fruits, conforme à la revendication 1, **caractérisé en ce qu'**on utilise dans le composant B, en tant que colorant alimentaire, de l'acide carminique et/ou du Curcuma, et/ou, en tant qu'aliment colorant, du concentré de jus de betterave rouge, du concentré de jus de carotte noire, du concentré de jus de sureau, de l'extrait de peau de raisin et/ou de la poudre de peau de raison.

3. Procédé de fabrication d'un produit à base de fruits, conforme à la revendication 1 ou 2, **caractérisé en ce qu'**on utilise dans le composant B, en tant que sels tampons, du citrate trisodique et/ou de l'acide citrique.

4. Procédé de fabrication d'un produit à base de fruits, conforme à l'une des revendications 1 à 3, **caractérisé en ce que** le composant A contient au moins 80 % de fruits.

5. Procédé conforme à l'une des revendications 1 à 4, **caractérisé en ce que** la préparation du composant C comporte les étapes suivantes :
- chauffer du sucre, en option du saccharose de diverses sortes de sucre, et de l'eau,
- ajouter les stabilisants, de préférence à environ 60 °C,
- chauffer le mélange jusqu'à une température d'environ 80 à 99 °C, et de préférence, d'environ 90 °C,
- continuer à le chauffer pour le maintenir à la température de pasteurisation, de préférence durant environ 10 minutes,
- faire refroidir ce mélange C jusqu'à une température de 20 à 60 °C,
- et mise en récipients, à froid et sous asepsie, ou acheminement vers la ligne de production de l'utilisateur final.
